# EUROPEAN PATENT SPECIFICATION

(11) **EP 2 848 423 B1**
(45) Date of publication and mention of the grant of the patent: **08.04.2020**
(21) Application number: 14184476.1
(22) Date of filing: 11.09.2014
(51) Int. Cl.: B42D 25/445, B42D 25/351, B42D 25/328, B42D 25/36, B42D 25/373

(54) **Security laminate/foil**
Sicherheitsbeschichtung/-folie
Feuille/stratifié de sécurité

(30) Priority: 13.09.2013 GB 201316348
(43) Date of publication of application: 18.03.2015
(73) Proprietor: Andrews & Wykeham Limited, Basingstoke RG24 8LJ (GB)
(72) Inventor: Kelly, Dennis Allen, Wollaston Northamptobshire NN29 7QA (GB); Maberley, Kevin John, Newbury Berkshire RG20 4SU (GB)
(74) Representative: Barker Brettell LLP

(56) References cited:
- EP-B1- 0 563 109
- US-A1- 2007 292 636
- US-A1- 2009 317 595
- US-A1- 2010 196 587
- US-A1- 2011 101 670
- US-A1- 2011 114 733
- US-B1- 6 817 689

## Description

### Technical Field

The present invention relates to security laminate and security foil products.

### Background

Various methods are known for producing bimetallic holographic laminates and foils. Such laminates and foils are used as security components for items such as passports, identity cards, credential items (such as credit cards and bank cards), and government documents. These laminates and foils are applied to the item and provide an indication of the authenticity of the item, overt and sometimes also covert. These foils and laminates are usually produced in a reel to reel process on a polyester (PET), or other polymer, base film. These foils usually comprise two different non-transparent metals (eg Aluminium and Copper) or a non-transparent metal (eg Aluminium) and a largely transparent high-refractive index (HRI) material (eg Zinc Sulphide or Titanium Dioxide).

One such production method comprises a film metallisation stage, for example using vacuum deposited Aluminium; a demetallisation stage, for example directly printing indicia with chemical etchant and washing it off to selectively remove Aluminium in printed areas, and subsequently drying the film, or printing a mask comprising indicia, applying chemical etchant all-over and washing it off to selectively remove Aluminium in unprinted areas, and subsequently drying the film; and, finally, a post-metallisation stage, for example using Zinc Sulphide, applied by vacuum deposition or by sputtering. A second known method comprises selectively metallising the film with Aluminium (or other metal) by way of a masked vacuum deposition process, and then post-metallising all-over with, for example, Zinc Sulphide, using vacuum deposition or sputtering. A further method comprises metallising the film all-over with Zinc Sulphide or other largely transparent high refractive index material, and then selectively metallising by a masked vacuum deposition process the Aluminium (or other metal), without removing the HRI material.

We have devised an improved security laminate/foil and an improved production method for producing the same.

### Summary

The invention is defined by the claims.

### Brief Description of the drawings

Various embodiments of the invention will now be described, by way of example only, with reference to the following drawings in which:
**Figure 1** is a cross section of a base film for a security foil,
**Figure 2** is a cross-section of the base film of Figure 1 provided with a layer of a high refractive index material (HRI),
**Figure 3** is a cross-section of the HRI coated base film of Figure 2 to which a metallic layer is further applied, and
**Figure 4** is a cross-section of the foil of Figure 3 in which the portions of the metallic layer have been removed.

### Detailed Description

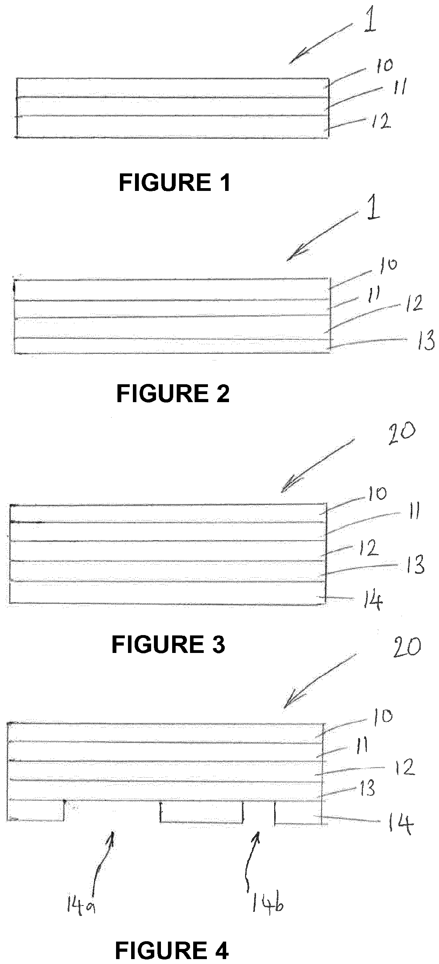

With reference to Figure 1, there will be described a process for producing a bimetallic laminate or foil, to which can be applied visual security indicia.

Figure 1 shows a base film to which two metallised layers are to be applied. The base 1 comprises a first sub-layer 10 which comprises a PET (Polyester) material. Adjacent to the sub-layer 10 there is provided a release layer 11. Adjacent to the release layer 11, there is provided an acrylic layer 12 which comprises an embossing lacquer arranged to replicate a holographic structure. It will be appreciated that, in the case of laminate, rather than foil, the release layer may not be provided, leaving the layers 10 and 12 adjacent to each other form the base film.

The acrylic layer 12 is first metallised all-over with a high reflective index material, such as Zinc Sulphide or Titanium Dioxide (or indeed another HRI material). This then forms an HRI layer 13. There is thus formed the intermediate structure shown in Figure 2.

Onto the HRI layer 13 an all-over metallic coating is provided. The coating may be of Aluminium or other metal, thus creating a metallic layer 14.

There is thus formed in Figure 3, comprising the four layers 10 through to 14, a bimetallic foil 20. The foil is of flexible reel or sheet form. The foil may have a thickness in the range 6 to 100 microns.

It will be appreciated that production of laminate or foil could be performed on two metallisation machines inline with each other or two successively arranged units of the same machine, with the first applying the HRI layer and the second applying the metallic layer. Alternatively each of the layers 13 and 14 may be applied using one and the same metallisation machine, with a first pass to apply the HRI layer and a second pass to apply the metallic layer.

The foil 20 can now be processed to apply suitable visual indicia thereto, which involves selectively removing portions of the metallic layer 14. This selective removal may be achieved in two exemplary ways. The first comprises printing a mask comprising indicia onto the metallic layer and then applying an etchant all-over, washing it off and drying so as to leave a required pattern. The second method comprises directly printing indicia with etchant onto the metallic layer in the required locations, washing it off and drying so as to leave a required pattern. As can be seen in Figure 4, the regions 14a and 14b are void of Aluminium or other metal due to the treatment of those locations with etchant, leaving the underlying regions of the HRI layer intact.

The etchant preferably comprises an alkaline etchant, such as a solution of metal hydroxide, and preferably an alkali metal hydroxide such as sodium and/or potassium hydroxide, and modified by mixing with an alcohol and/or diol, triol or polyol. Etchant speed and efficiency can be improved by heating to increase speed and cooling to increase efficiency. The etchant may further comprise an oxidising agent to also improve speed and efficiency of etching.

Advantageously, use of such an etchant allows removal of portions of the metallic layer without damaging the underlying HRI layer. This is in part achieved by applying sufficient quantity of etchant to ensure that it remains alkaline on reaching the HRI layer, and therefore avoids damage to that layer.

The foil produced is substantially transparent in the regions with removed metallic layer, and, after application of an adhesive, can be applied to credentials such as passport pages, identity cards etc, whilst allowing the underlying information on the credential to remain visible. The HRI layer 13 serves to enhance the reflection of the holographic image whilst maintaining transparency.

Unlike known methods, the HRI layer and the metallic layer may both be applied substantially all-over one after the other without any intermediate steps, enabling their application on the same metallising machine or two inline metallising machines of similar construction, and the wasteful pattern formation (demetallisation) step is a subsequent step, thus potentially reducing the waste rates in production.

Production of the bimetallic laminate or foil comprises embossing with a holographic image, either before or after the application of the HRI layer and the metallic layer.

Advantageously, the production of the bimetallic laminate or foil as described above results in less waste than a selective metallisation or demetallisation/re-metallisation process.

Advantageously, in the production of the bimetallic laminate or foil as described above both metallisation passes may be performed at wide width, followed by narrow width demetallisation, compared to other methods that necessitate re-metallisation at narrow width, the latter resulting in lower outputs and higher waste rates.

Further, advantageously, the production of the bimetallic laminate or foil as described above induces less stretching of the base film, and therefore results in better registration of the demetallised indicia to the holographic image, as compared to known methods.

## Claims

1. A method of producing a security laminate/foil comprising first applying a substantially all-over coating (13) of a high refractive index, HRI, material to a base film (1), and then applying a substantially all-over coating of a metallic material to form a metallic layer (14), and the metallic layer arranged to allow selective removal of portions thereof to generate required indicia, and the method further comprises applying an alkaline etchant to the metallic layer to effect the selective removal step, and which comprises applying a sufficient quantity of the etchant such that the etchant remains alkaline on reaching the HRI material underlying the metallic layer, and which step leaves the underlying HRI material substantially intact.

2. A method of claim 1 which further comprises selective removal of portions of the metallic layer (14) to form the indicia.

3. A method as claimed in claim 2 in which the step of selective removal comprises printing required indicia with an etchant, or comprises printing a mask comprising required indicia followed by substantially all-over application of an etchant.

4. A method as claimed in claims 2 or 3 in which the selective removal step leaves the HRI layer substantially devoid of damage resulting from the selective removal step.

5. A method as claimed in claim 1 in which the etchant comprises an alkali metal hydroxide.

6. A method as claimed in claim 1 in which the etchant comprises an alkali metal hydroxide mixed with alcohol and/or diol, triol or polyol.

7. A method of producing a security laminate/foil comprising the selective removal of portions of a metallic layer (14) of the laminate/foil, the method comprising applying the selective removal to the laminate/foil which comprises a base film (1), a substantially all over layer (13) of high reflective index, HRI material, and a substantially all over layer of a metallic material, the metallic layer adjacent to the HRI layer, and the HRI layer is closer to the base film than the metallic layer, and the method further comprises applying an alkaline etchant to the metallic layer to effect the selective removal step, and which comprises applying a sufficient quantity of the etchant such that the etchant remains alkaline on reaching the HRI material underlying the metallic layer, and which step leaves the HRI material substantially intact.

## Patentansprüche

1. Verfahren zum Herstellen eines Sicherheitslaminats/einer Sicherheitsfolie, umfassend zunächst Aufbringen einer im Wesentlichen allseitigen Beschichtung (13) aus einem Material mit hohem Brechungsindex, HRI (High Refractive Index), auf eine Basisfolie (1) und dann Aufbringen einer im Wesentlichen allseitigen Beschichtung aus einem metallischen Material, um eine Metallschicht (14) auszubilden, und wobei die Metallschicht angeordnet ist, um ein selektives Entfernen von Teilen davon zu ermöglichen, um erforderliche Indicia zu erzeugen, und das Verfahren ferner das Aufbringen eines alkalischen Ätzmittels auf die Metallschicht umfasst, um den selektiven Entfernungsschritt zu bewirken, und welches das Aufbringen einer ausreichenden Menge des Ätzmittels umfasst, so dass das Ätzmittel beim Erreichen des der Metallschicht zugrunde liegenden HRI-Materials alkalisch bleibt, und welcher Schritt das zugrunde liegende HRI-Material im Wesentlichen intakt lässt.

2. Verfahren nach Anspruch 1, das ferner ein selektives Entfernen von Teilen der Metallschicht (14) zum Ausbilden der Indicia umfasst.

3. Verfahren nach Anspruch 2, bei dem der Schritt des selektiven Entfernens das Drucken erforderlicher Indicia mit einem Ätzmittel umfasst oder das Drucken einer Maske umfasst, die erforderliche Indicia umfasst, gefolgt von einem im Wesentlichen allseitigen Aufbringen eines Ätzmittels.

4. Verfahren nach Anspruch 2 oder 3, bei dem der selektive Entfernungsschritt die HRI-Schicht im Wesentlichen frei von Schäden hinterlässt, die sich aus dem selektiven Entfernungsschritt ergeben.

5. Verfahren nach Anspruch 1, bei dem das Ätzmittel ein Alkalimetallhydroxid umfasst.

6. Verfahren nach Anspruch 1, bei dem das Ätzmittel ein Alkalimetallhydroxid umfasst, das mit Alkohol und/oder Diol, Triol oder Polyol gemischt ist.

7. Verfahren zum Herstellen eines Sicherheitslaminats/einer Sicherheitsfolie, umfassend das selektive Entfernen von Teilen einer Metallschicht (14) des Laminats/der Folie, das Verfahren umfassend das Anwenden des selektiven Entfernens auf das Laminat/die Folie, das/die einen Basisfilm (1), eine im Wesentlichen allseitige Schicht (13) aus Material mit hohem Reflexionsindex, HRI (High Reflective Index), und eine im Wesentlichen allseitige Schicht aus einem metallischen Material umfasst, wobei die Metallschicht an die HRI-Schicht angrenzt und die HRI-Schicht näher am Basisfilm liegt als die Metallschicht, und das Verfahren ferner das Aufbringen eines alkalischen Ätzmittels auf die Metallschicht umfasst, um den selektiven Entfernungsschritt zu bewirken, und welches das Aufbringen einer ausreichenden Menge des Ätzmittels umfasst, so dass das Ätzmittel beim Erreichen des der Metallschicht zugrunde liegenden HRI-Materials alkalisch bleibt, und welcher Schritt das HRI-Material im Wesentlichen intakt lässt.

## Revendications

1. Procédé de production d'un stratifié/d'une feuille de sécurité comprenant d'abord l'application d'un revêtement sensiblement intégral (13) d'un matériau à indice de réfraction élevé, HRI, sur un film de base (1), et puis l'application d'un revêtement sensiblement intégral d'un matériau métallique pour former une couche métallique (14), et de la couche métallique agencée pour permettre l'élimination sélective de parties de celle-ci pour générer les indices requis, et le procédé comprend en outre l'application d'un agent de gravure alcalin sur la couche métallique pour effectuer l'étape d'élimination sélective, et qui comprend l'application d'une quantité suffisante de l'agent de gravure de sorte que l'agent de gravure reste alcalin lorsqu'il atteint le matériau HRI sous-jacent à la couche métallique, et laquelle étape laisse le matériau HRI sous-jacent sensiblement intact.

2. Procédé selon la revendication 1, qui comprend en outre l'élimination sélective de parties de la couche métallique (14) pour former les indices.

3. Procédé selon la revendication 2, dans lequel l'étape d'élimination sélective comprend l'impression des indices requis avec un agent de gravure, ou comprend l'impression d'un masque comprenant les indices requis suivie d'une application sensiblement intégrale d'un agent de gravure.

4. Procédé selon les revendications 2 ou 3, dans lequel l'étape d'élimination sélective laisse la couche HRI sensiblement exempte de dommages résultant de l'étape d'élimination sélective.

5. Procédé selon la revendication 1, dans lequel l'agent de gravure comprend un hydroxyde de métal alcalin.

6. Procédé selon la revendication 1, dans lequel l'agent de gravure comprend un hydroxyde de métal alcalin mélangé à de l'alcool et/ou du diol, du triol ou du polyol.

7. Procédé de production d'un stratifié/d'une feuille de sécurité comprenant l'élimination sélective de parties d'une couche métallique (14) du stratifié/de la feuille, le procédé comprenant l'application de l'élimination sélective au stratifié/à la feuille qui comprend un film de base (1), une couche sensiblement intégrale (13) à matériau à indice de réflexion élevé, HRI, et une couche sensiblement intégrale d'un matériau métallique, la couche métallique étant adjacente à la couche HRI, et la couche HRI est plus proche du film de base que la couche métallique, et le procédé comprend en outre l'application d'un agent de gravure alcalin sur la couche métallique pour effectuer l'étape d'élimination sélective, et qui comprend l'application d'une quantité suffisante de l'agent de gravure de sorte que l'agent de gravure reste alcalin lorsqu'il atteint le matériau HRI sous-jacent à la couche métallique, et laquelle étape laisse le matériau HRI sensiblement intact.
